# FASCICULE DE BREVET EUROPEEN

(11) **EP 4 168 658 B1**
(45) Date de publication et mention de la délivrance du brevet: **20.11.2024**
(21) Numéro de dépôt: 21737729.0
(22) Date de dépôt: 15.06.2021
(51) Int. Cl.: F04D 17/12, F02C 3/10, F04D 29/42, F01D 9/02, F02C 7/08, F04D 25/04, F04D 29/58, F04D 29/44

(54) **TURBOMACHINE D'AERONEF A CYCLE RECUPERE**
FLUGZEUGTURBOMASCHINE MIT WIEDERGEWONNENEM ZYKLUS
RECOVERED-CYCLE AIRCRAFT TURBOMACHINE

(30) Priorité: 17.06.2020 FR 2006309
(43) Date de publication de la demande: 26.04.2023
(73) Titulaire: Safran Helicopter Engines, 64510 Bordes (FR)
(72) Inventeur: PONS, Bernard Claude, 77550 MOISSY-CRAMAYEL (FR); PUERTO, Alphonse, 77550 MOISSY-CRAMAYEL (FR); TARNOWSKI, Laurent Pierre, 77550 MOISSY-CRAMAYEL (FR); VIVE, Loïs Pierre Denis, 77550 MOISSY-CRAMAYEL (FR)
(74) Mandataire: Gevers & Orès
(86) Numéro de dépôt international: PCT/FR2021/051075
(87) Numéro de publication internationale: WO 2021/255383

(56) Documents cités:
- EP-A2- 2 799 666
- CH-A- 248 924
- US-A1- 2005 235 627

## Description

### Domaine technique de l'invention

La présente invention concerne une turbomachine d'aéronef équipée d'un ensemble de volutes pour la mise en oeuvre d'un cycle récupéré.

### Arrière-plan technique

Une turbomachine d'aéronef comprend un générateur de gaz comportant d'amont en aval, dans le sens d'écoulement des gaz, au moins un compresseur, une chambre annulaire de combustion, et au moins une turbine. Le compresseur est alimenté en air et le comprime. L'air comprimé est mélangé à du carburant et brûlé dans la chambre de combustion qui fournit des gaz de combustion à la turbine. Ces gaz de combustion se détendent dans la turbine et entraînent en rotation son rotor, qui entraîne à son tour, par l'intermédiaire d'un arbre commun, le rotor du compresseur.

Une turbomachine peut être équipée d'un ou plusieurs corps comportant chacun un rotor de compresseur relié par un arbre à un rotor de turbine.

Il existe également des turbomachines où une turbine libre est montée en aval du ou des corps de la turbomachine. Une turbine est libre dans la mesure où son rotor n'est pas relié par un arbre à un rotor de compresseur.

On comprend ainsi qu'une turbomachine peut comprendre plusieurs compresseurs successifs (par exemple un compresseur basse pression suivi d'un compresseur haute pression), ainsi que plusieurs turbines successives (par exemple une turbine haute pression suivie d'une turbine libre ou d'une turbine basse pression).

Dans la présente demande, on entend par une turbomachine à cycle classique, une turbomachine dont l'air comprimé sortant du ou des compresseurs alimentent directement la chambre de combustion.

A contrario, on entend par une turbomachine à cycle récupéré, une turbomachine dans laquelle les gaz de combustion s'écoulant en sortie de la ou des turbines sont utilisés pour réchauffer l'air comprimé sortant du ou des compresseurs et destiné à alimenter la chambre de combustion. Cette technologie permet d'améliorer les performances de la turbomachine car la quantité de carburant nécessaire pour atteindre la température de fonctionnement de la turbomachine est inférieure à celle nécessaire dans le cadre d'une turbomachine à cycle classique.

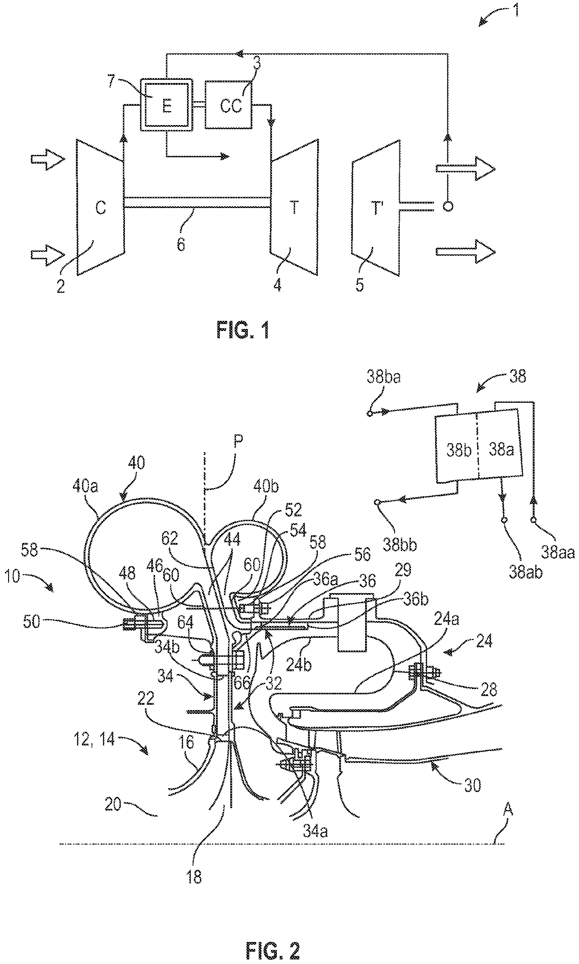

La figure 1 représente de manière très schématique une turbomachine à cycle récupéré.

La turbomachine 1 comprend d'amont en aval un compresseur 2, une chambre annulaire de combustion 3, une turbine 4 et une turbine libre 5. Les rotors du compresseur 3 et de la turbine 4 sont reliés ensemble par un arbre 6 et forment un même corps.

La turbomachine 1 comprend un échangeur de chaleur 7 dont un premier circuit est alimenté par des gaz de combustion prélevés en sortie de la turbine libre 5. L'échangeur 7 comprend un second circuit qui est alimenté en air comprimé sortant du compresseur 2 et qui fournit de l'air comprimé réchauffé à la chambre de combustion 3.

L'intégration de cette technologie peut être rendue complexe lorsque le compresseur 2 est du type centrifuge. Un compresseur centrifuge est un compresseur qui a une entrée orientée parallèlement à l'axe longitudinal de la turbomachine, et une sortie qui est orientée radialement par rapport à cet axe. Ce type de compresseur est associé à un système de diffusion et de redressement du flux d'air comprimé. Ce système comprend un ensemble diffuseur-redresseur et comporte donc un diffuseur annulaire qui est orienté sensiblement radialement et qui est aligné avec la sortie du compresseur centrifuge, et un redresseur annulaire qui est orienté sensiblement axialement pour orienter le flux d'air comprimé vers la chambre de combustion.

Une solution d'intégration pour cette technologie a déjà été proposée dans le passé et consiste à utiliser un ensemble de deux volutes.

Une volute est un conduit enroulé en spirale autour d'un axe et dont la section de passage de fluide évolue. Dans le cadre de la présente demande, une volute comprend un conduit annulaire enroulé autour de l'axe longitudinal de la turbomachine et relié à un premier port situé à la périphérie externe du conduit et orienté en direction tangentielle, et un second port situé à la périphérie interne du conduit et orienté en direction radiale.

Une première volute a son second port qui est raccordé à la sortie du diffuseur et son premier port qui alimente l'entrée du second circuit de l'échangeur. La sortie de ce second circuit est reliée au premier port de la seconde volute dont le second port est raccordé à l'entrée du redresseur.

La solution proposée dans le passé consiste d'abord à imbriquer les volutes l'une dans l'autre, depuis leurs premiers ports qui sont jumelés, jusqu'aux extrémités circonférentielles de plus petite section des conduits. La solution consiste en outre à rapprocher le plus possible les volutes du compresseur centrifuge et de la chambre de combustion.

Cependant, cette solution présente de nombreux inconvénients.

Tout d'abord, bien que le fait de rapprocher les volutes l'une de l'autre, voire de les accoler l'une à l'autre, est avantageux d'un point de vue de l'encombrement, ceci est très pénalisant en particulier d'un point de vue énergétique et performance lorsque les volutes sont imbriquées l'une dans l'autre. En effet, plus les volutes sont imbriquées l'une dans l'autre et plus le risque d'échange thermique entre les flux circulants dans les conduits des deux volutes est important. L'air comprimé qui est réchauffé par l'échangeur et qui circule dans la seconde volute, est alors refroidi par l'air comprimé plus froid destiné à alimenter cet échangeur et qui circule dans la première volute. Le fait de jumeler les premiers ports accentuent ce phénomène puisque l'extrémité circonférentielle la plus chaude de la première volute est située au niveau de l'extrémité circonférentielle la plus froide de la seconde volute. Par ailleurs, la solution proposée engendre des modifications importantes de la turbomachine et donc des coûts relativement importants. Une reconception complète de la chambre de combustion est par exemple nécessaire. C'est également le cas du redresseur qui doit être reconfiguré pour maîtriser avec précision la vitesse (et en particulier le Mach) et la giration du flux d'air alimentant la chambre de combustion.

L'art antérieur comprend également les documents EP-A2-2799666, US-A1-2005/235627 et CH-A-248924.

La présente invention propose une solution aux problèmes précités pour intégrer un ensemble de volutes dans une turbomachine sans changement majeur de cette dernière, et permettant ainsi de transformer une turbomachine à cycle classique en une turbomachine à cycle récupéré.

### Résumé de l'invention

Selon un premier aspect, l'invention concerne une turbomachine d'aéronef, comportant :
- un compresseur centrifuge s'étendant autour d'un axe A,
- une chambre annulaire de combustion s'étendant autour de l'axe A,
- un système de diffusion et de redressement d'un flux d'air sortant du compresseur centrifuge pour alimenter la chambre de combustion, ce système comportant :
   - un diffuseur annulaire qui est orienté sensiblement radialement et qui comprend une entrée alimentée par le compresseur centrifuge, et
   - un redresseur annulaire qui comprend une sortie pour alimenter la chambre de combustion, et
- un échangeur de chaleur, cet échangeur comportant :
   - un premier circuit alimenté en gaz d'échappement de la turbomachine, et
   - un second circuit comportant une entrée reliée par une première volute à une sortie du diffuseur, et une sortie reliée par une seconde volute à une entrée du redresseur, les première et seconde volutes étant accolées et comportant chacune un conduit annulaire enroulé autour de l'axe A et relié à un premier port situé à la périphérie externe du conduit et orienté en direction tangentielle, et un second port situé à la périphérie interne du conduit et orienté en direction radiale, le conduit de chacune des volutes ayant une section de passage évolutive et qui est maximale au niveau du premier port et minimale à une extrémité circonférentielle du conduit opposée au premier port,
caractérisée en ce que les volutes ont des sens d'enroulement inversés de sorte que leurs premiers ports soient formés par des parties de conduits espacées l'une de l'autre et que la section minimale de chaque conduit soit située au niveau d'une plus grande section de l'autre conduit.

Les volutes sont ainsi configurées et agencées pour optimiser leur encombrement tout en limitant les échanges thermiques entre les fluides circulant dans leurs conduits. Le premier port de la première volute fait circuler un flux plus froid que le fluide circulant dans le premier port de la seconde volute et ne risque pas de refroidir ce dernier fluide du fait de la distance prévue entre ces premiers ports. Les volutes sont en outre avantageusement conçues pour faciliter leur intégration dans la turbomachine tout en limitant l'impact sur cette dernière, c'est-à-dire en limitant les modifications structurelles de celle-ci.

Avantageusement, la turbomachine est un turbomoteur, le turbomoteur étant par exemple destiné à entrainer la voilure tournante d'un hélicoptère.

La turbomachine selon l'invention peut comprendre une ou plusieurs des étapes ou caractéristiques suivantes, considérées indépendamment les unes des autres ou en combinaison les unes avec les autres :
- chacune des volutes présente des sections de passage de forme circulaire ou ovale s'étendant sur un angle d'au moins 220°,
   -- la section de passage de la première volute n'est pas imbriquée dans la section de passage de l'autre volute ;
- le second port de chaque volute comprend deux parois annulaires s'étendant autour de l'axe A et définissant entre elles une veine de passage d'air ;
- les deux parois du second port sont sensiblement parallèles et s'étendent en saillie depuis une peau annulaire de la volute, cette peau s'étendant autour de l'axe A et ayant en section axiale une forme circulaire ou ovale pour former ledit conduit ;
- l'une des parois du second port de la première volute est confondue avec l'une des parois du second port de la seconde volute ;
- les parois du second port de la première volute ont des extrémités libres opposées à la peau, qui définissent un connecteur orienté sensiblement radialement de liaison à la sortie du diffuseur, et les parois du second port de la seconde volute ont des extrémités libres opposées à la peau, qui définissent un connecteur orienté sensiblement axialement de liaison à l'entrée du redresseur ;
- les parois des seconds ports ont des formes planes et perpendiculaires à l'axe A, ou ont des formes tronconiques convergentes de l'amont vers l'aval vers l'intérieur ;
- la peau et les parois ont sensiblement une même épaisseur ;
- la turbomachine comprend en outre un carter externe qui s'étend autour de l'axe A et entoure la chambre de combustion, les volutes étant à distance du carter et fixées à ce dernier par des brides.

La présente invention concerne encore un ensemble de volutes pour une turbomachine selon l'une des revendications précédentes, cet ensemble comportant des première et seconde volutes qui sont accolées et comportent chacune un conduit annulaire enroulé autour de l'axe A et relié à un premier port situé à la périphérie externe du conduit et orienté en direction tangentielle, et un second port situé à la périphérie interne du conduit et orienté en direction radiale, le conduit de chacune des volutes ayant une section de passage évolutive et qui est maximale au niveau du premier port et minimale à une extrémité circonférentielle du conduit opposée au premier port, caractérisé en ce que les volutes ont des sens d'enroulement inversés de sorte que leurs premiers ports soient formés par des parties de conduits espacées l'une de l'autre et que la section minimale de chaque conduit soit située au niveau d'une plus grande section de l'autre conduit.

Dans un cas particulier de réalisation de l'invention, les premiers ports des volutes sont raccordés l'un à l'autre par une conduite de dérivation.

L'invention propose également un procédé de fabrication d'une turbomachine d'aéronef, cette turbomachine comportant :
- un compresseur centrifuge s'étendant autour d'un axe A,
- une chambre annulaire de combustion s'étendant autour de l'axe A,
- un système e diffusion et de redressement d'un flux d'air sortant du compresseur centrifuge pour alimenter la chambre de combustion, ce système comportant :
- un diffuseur annulaire qui est orienté sensiblement radialement et qui comprend une entrée alimentée par le compresseur centrifuge, et
- un redresseur annulaire qui comprend une sortie pour alimenter la chambre de combustion,
caractérisé en ce qu'il comprend les étapes consistant à :
a) déterminer un cycle de la turbomachine, parmi un cycle classique et un cycle récupéré, et
b2) dans le cas d'un cycle récupéré, équiper la turbomachine avec un ensemble de volutes tel que décrit ci-dessus, une première des volutes ayant son second port qui est raccordé à la sortie du diffuseur, et la seconde des volutes ayant son second port qui est raccordé à l'entrée du redresseur.

Selon un second aspect, l'invention concerne un procédé de fabrication d'une turbomachine d'aéronef, cette turbomachine comportant :
- un compresseur centrifuge s'étendant autour d'un axe A,
- une chambre annulaire de combustion s'étendant autour de l'axe A,
- un système de diffusion et de redressement d'un flux d'air sortant du compresseur centrifuge pour alimenter la chambre de combustion, ce système comportant :
- un diffuseur annulaire qui est orienté sensiblement radialement et qui comprend une entrée alimentée par le compresseur centrifuge, et
- un redresseur annulaire qui comprend une sortie pour alimenter la chambre de combustion,
caractérisé en ce qu'il comprend les étapes consistant à :
a) déterminer un cycle de la turbomachine, parmi un cycle classique et un cycle récupéré, et

b1) dans le cas d'un cycle classique, raccorder une sortie du diffuseur à une entrée du redresseur,
b2) dans le cas d'un cycle récupéré, équiper la turbomachine avec un ensemble de deux volutes qui comporte chacune un conduit annulaire enroulé autour de l'axe A, chaque volute comportant un premier port situé à la périphérie externe du conduit et orienté en direction tangentielle, et un second port situé à la périphérie interne du conduit et orienté en direction radiale, une première des volutes ayant son second port qui est raccordé à la sortie du diffuseur, et la seconde des volutes ayant son second port qui est raccordé à l'entrée du redresseur.

On comprend donc que la turbomachine a une structure de base commune pouvant servir à la fabrication d'une turbomachine à cycle classique ou récupéré. Ceci est particulièrement avantageux car cela facilite la conception de la turbomachine et limite le nombre de ses pièces et références.

Le procédé selon l'invention peut comprendre une ou plusieurs des étapes ou caractéristiques suivantes, considérées indépendamment les unes des autres ou en combinaison les unes avec les autres :
- à l'étape b1), la sortie du diffuseur est directement raccordée à l'entrée du redresseur ;
- à l'étape b1), la sortie du diffuseur est raccordée à l'entrée du redresseur par un élément annulaire de raccordement qui s'étend autour de l'axe X et définit une veine de passage d'air ayant en section axiale une forme générale en U ;
- l'élément annulaire comprend un premier connecteur annulaire qui est orienté radialement vers l'intérieur par rapport à l'axe et qui est raccordé à la sortie du diffuseur, et un second connecteur annulaire qui est orienté sensiblement axialement et qui est raccordée à l'entrée du redresseur, les premier et second connecteurs étant respectivement situés aux extrémités de la veine en U ;
- à l'étape b2), les première et seconde volutes sont accolées, le conduit de chacune des volutes ayant une section de passage évolutive et qui est maximale au niveau du premier port et minimale à une extrémité circonférentielle du conduit opposée au premier port ;
- les volutes ont des sens d'enroulement inversés de sorte que leurs premiers ports soient formés par des parties de conduits espacées l'une de l'autre et que la section minimale de chaque conduit soit située au niveau d'une plus grande section de l'autre conduit ;
- à l'étape b2), la turbomachine est également équipée avec un échangeur de chaleur qui comporte :
   - un premier circuit alimenté en gaz d'échappement de la turbomachine, et
   - un second circuit comportant une entrée reliée au premier port de la première volute, et une sortie reliée au premier port de la seconde volute.
- à l'étape b2), l'ensemble de volutes est formé d'une seule pièce et rapporté et fixé par bridage sur un carter externe de la turbomachine qui entoure ladite chambre de combustion ;
- après l'étape b2), la turbomachine est transformée d'un cycle récupéré en un cycle classique, les premiers ports des volutes étant alors raccordés l'un à l'autre par une conduite de dérivation.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue très schématique d'une turbomachine d'aéronef à cycle récupéré ;
[Fig.2] la figure 2 est une vue schématique partielle en coupe axiale d'une turbomachine d'aéronef à cycle récupéré, selon un premier mode de réalisation de l'invention ;
[Fig.3] la figure 3 est une vue schématique en perspective d'un ensemble de volutes selon l'invention ;
[Fig.4] la figure 4 est une vue schématique en coupe axiale de l'ensemble de volutes de la figure 3 ;
[Fig.5a-5b] les figures 5a et 5b représentent d'autres vues schématiques en coupe axiale de l'ensemble de la figure 3 ;
[Fig.6] la figure 6 est une vue similaire à celle de la figure 2 et illustre un second mode de réalisation de l'invention ;
[Fig.7] la figure 7 est une vue schématique en perspective d'un ensemble de volutes selon une variante de réalisation de l'invention ;
[Fig.8] la figure 8 est une vue schématique en perspective d'un élément annulaire de raccordement selon l'invention ; et
[Fig.9] la figure 9 est une vue schématique en coupe axiale de l'élément annulaire de la figure 8.

### Description détaillée de l'invention

La figure 1 a déjà été décrite dans ce qui précède.
Les figures 2 à 4, 5a et 5b illustrent un premier mode de réalisation d'une turbomachine 10 d'aéronef selon l'invention.

La turbomachine 10 est partiellement représentée à la figure 1 et comprend de manière classique au moins un compresseur, une chambre annulaire de combustion et au moins une turbine.

Dans l'exemple représenté, la turbomachine 10 comprend deux compresseurs 12, 14 successifs qui sont donc montés l'un à la suite de l'autre et qui sont tous les deux du type centrifuge.

Les compresseurs 12, 14 ont une forme annulaire et sont coaxiaux et centrés sur un axe A qui est l'axe longitudinal de la turbomachine 10. Chaque compresseur 12, 14 comprend un stator 16 et un rotor aubagé 18, appelé rouet, qui tourne à l'intérieur du stator 16 et autour de l'axe A.

Chaque compresseur 12, 14 comprend une entrée 20 orientée axialement vers l'amont et une sortie 22 orientée radialement vers l'extérieur vis-à-vis de l'axe A. Les expressions amont et aval font ici référence à l'écoulement général de l'air et des gaz dans la turbomachine 10.

Le compresseur 14 est ainsi situé en aval du compresseur 12.

La turbomachine 10 de la figure 2 comprend en outre une chambre de combustion 24 qui est située en aval du compresseur 14.

Une chambre de combustion 24 comprend deux parois annulaires, respectivement interne 24a, et externe 24b, qui définissent entre elles une cavité annulaire dans laquelle sont injectés et mélangés de l'air comprimé provenant du compresseur 14 et du carburant provenant d'injecteurs 26. Les parois 24a, 24b sont reliées entre elles par un fond de chambre 28 qui a une forme annulaire et qui comprend des orifices (non visibles) de passage de l'air comprimé provenant du compresseur 14 pour l'alimentation de la chambre 24.

La chambre de combustion 24 est entourée par un carter annulaire externe 29 qui porte notamment les injecteurs 26.

Dans l'exemple représenté, la chambre 24 est du type inversé car son fond de chambre 28 est situé du côté aval de cette chambre. La sortie de la chambre 24 est située du côté amont de la chambre et est raccordée à une ou plusieurs turbines 30 disposées en aval de la chambre.

Les gaz de combustion injectés dans la turbine 30 se détendent et entraînent son rotor qui est relié par un arbre au rotor 18 d'au moins un des compresseurs 12, 14 en vue de leur entraînement en rotation autour de l'axe A.

Les gaz de combustion sont ensuite évacués dans une tuyère d'échappement des gaz de combustion qui n'est pas représentée.

Dans une turbomachine 10 à cycle classique, le raccordement de la sortie du compresseur 14 à la chambre de combustion 24 est réalisé par un système 32 de diffusion et de redressement d'air, aussi appelé diffuseur-redresseur.

Ce système 32 comporte :
- un diffuseur annulaire 34 qui est orienté sensiblement radialement et qui comprend à sa périphérie interne une entrée 34a alimentée par le compresseur 14 et alignée radialement avec la sortie 22 de ce dernier, et une sortie 34b à sa périphérie externe qui débouche radialement vers l'extérieur ; et
- un redresseur annulaire 36 qui est orienté sensiblement axialement dans l'exemple représenté et qui comprend à son extrémité amont une entrée 36a, et à son extrémité aval une sortie 36b pour alimenter la chambre de combustion 24.

Le diffuseur 34 est situé en amont de la chambre 24 et de ses parois 24a, 24b et le redresseur 36 s'étend autour de la chambre 24 et de ses parois 24a, 24b et à l'intérieur du carter 29. Le diffuseur 34 peut être fixé par bridage au stator 16 du compresseur 12 et/ou du compresseur 14. Le redresseur 36 peut être fixé par bridage au carter 29.

Le diffuseur 34 et le redresseur 36 peuvent être aubagés.

Dans une turbomachine 10 à cycle classique, la sortie 34b du diffuseur 34 est directement raccordée, par exemple par un conduit coudé en L à l'entrée 36a du redresseur 36. Autrement, l'air comprimé sortant du compresseur 14 alimente directement la chambre de combustion 24.

Selon l'invention, la turbomachine 10 est du type à cycle récupéré ce qui signifie que l'air comprimé sortant du compresseur 14 est chauffé avant d'être injecté dans la chambre de combustion 24.

Le chauffage de l'air comprimé est réalisé au moyen d'un échangeur de chaleur 38 d'une part et d'un ensemble de deux volutes 40 d'autres part. L'échangeur de chaleur 38 est schématiquement représenté et comprend pour l'essentiel deux circuits 38a, 38b, à savoir :
- un premier circuit 38a dont une entrée 38aa est raccordé à des moyens de prélèvement de gaz d'échappement en sortie des turbines 30 ou dans la tuyère d'échappement précitée, et une sortie 38ab qui peut également être reliée à la tuyère d'échappement en vue du relargage de ces gaz dans l'atmosphère, et
- un second circuit 38b comportant une entrée 38ba et une sortie 38bb reliées à l'ensemble de volutes 40.

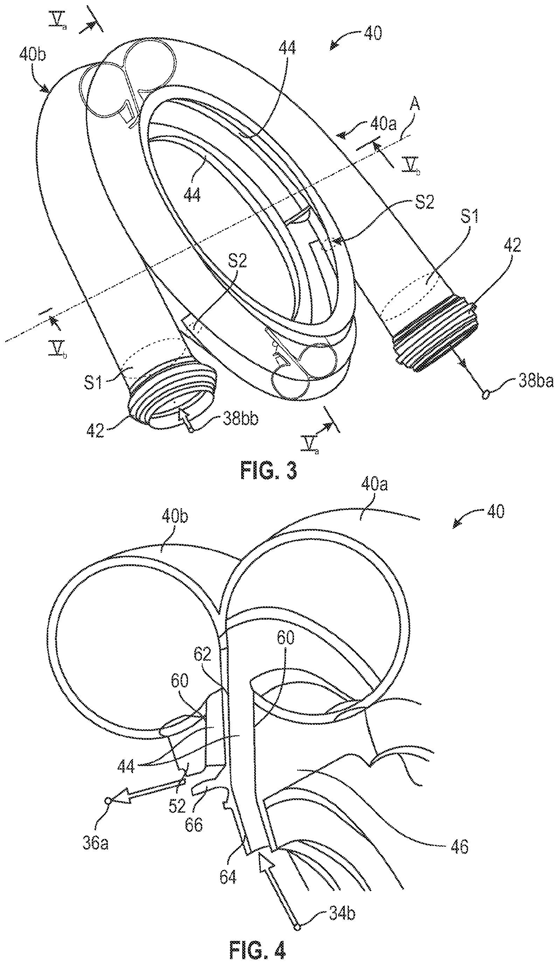

L'ensemble de volutes 40 est représenté dans son entièreté à la figure 3 et en coupe aux figures 2, 4, 5a et 5b.

L'ensemble 40 comprend deux volutes 40a, 40b qui sont ici accolées et coaxiales.

Chaque volute 40a ,40b comprend un conduit enroulé en spirale autour d'un axe qui est ici l'axe A, de préférence sur au moins 360° de façon à ce que le conduit fasse au moins un tour sur elle-même.

Chaque volute 40a, 40b comprend un premier port 42 situé à la périphérie externe du conduit et orienté en direction tangentielle, et un second port 44 situé à la périphérie interne du conduit et orienté en direction sensiblement radiale.

La section de passage du conduit évolue sur sa circonférence, de préférence de manière progressive. La section de passage est maximale S1 au niveau du premier port 42 de chaque volute 40a, 40b et minimale S2 au niveau de l'extrémité circonférentielle du conduit opposée au premier port 42. L'ensemble de volutes 40 est raccordé au diffuseur 34, au redresseur 36 et à l'échangeur 38 de la façon suivante. La volute 40a a son second port 44 qui est raccordé à la sortie 34b du diffuseur 34 et son premier port 42 qui alimente l'entrée 38ba du second circuit 38b de l'échangeur 38. La sortie 38bb de ce second circuit 38b est reliée au premier port 42 de la seconde volute 40b dont le second port 44 est raccordé à l'entrée 36a du redresseur 36.

Dans l'exemple représenté, la volute 40a est située en amont de la volute 40b. Les volutes 40a, 40b ont chacune une section de passage de forme circulaire ou ovale, de préférence sur toute leur étendue circonférentielle. Par forme ovale, on entend toute forme elliptique ou ovoïde, ou encore oblongue. D'autres formes sont cependant envisageables.

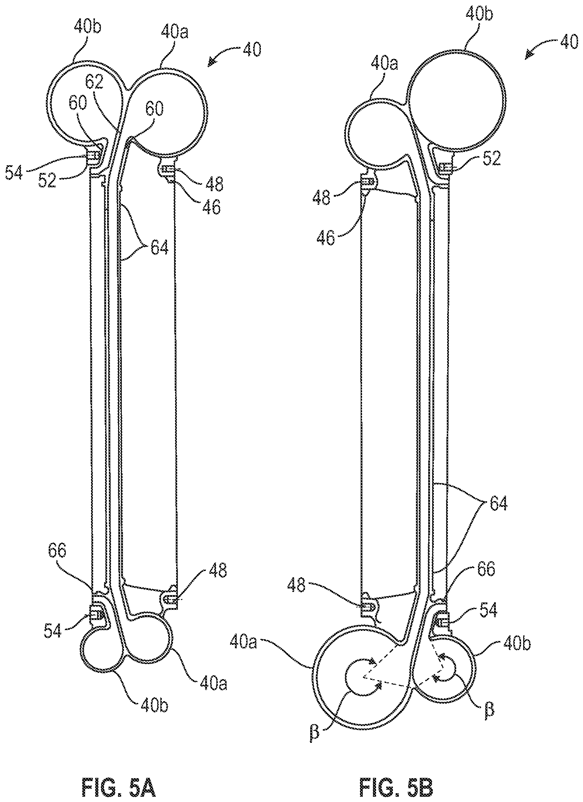

Les volutes 40a, 40b sont accolées et, de préférence, ne sont pas imbriquées l'une dans l'autre de façon à limiter les échanges thermiques entre les flux d'air circulant simultanément dans les deux volutes. Cela signifie que la section de passage d'une volute n'empiète pas sur la section de passage de l'autre volute. Dans le cas présent, cela signifie que la section de passage de chaque volute est quasi complète sur 360°. Elle est par exemple parfaitement circulaire ou quasi parfaitement circulaire dans le cas où la section de passage serait de forme circulaire. Plus exactement, on définit l'angle β comme étant l'angle minimal autour duquel s'étend la section de la volute (voir figure 5B). Cet angle est au moins égal à 220° et tend de préférence le plus possible vers 360°

Par ailleurs, les volutes 40a ,40b s'étendent autour et à distance du carter 29 et sont fixées à ce dernier par bridage, comme cela sera détaillé dans ce qui suit.

On définit le plan P comme étant un plan de jonction des volutes 40a, 40b, ce plan passant entre les volutes et étant perpendiculaire à l'axe A. Le plan P s'étend ici juste en amont du diffuseur 34.

Le conduit de chaque volute 40a, 40b comprend une peau annulaire qui définit la section de passage précitée et qui a une épaisseur sensiblement constante, à la fois sur son étendue circonférentielle autour de l'axe A mais aussi sur toute son étendue lorsqu'on considère une section axiale du conduit, comme visible à la figure 2 par exemple.

Comme cela est mieux visible aux figures 2, 5a et 5b, un premier bossage annulaire 46 est situé à la périphérie interne de la volute 40a et comprend des trous 48 borgnes et taraudés de vissage de vis 50. Un second bossage annulaire 52 est situé à la périphérie interne de la volute 40b et comprend des trous 54 borgnes et taraudés de vissage de vis 56.

Les bossages 46, 50 sont appliqués contre des brides annulaires 58 du carter 29 ou d'un autre carter externe de la turbomachine, ces brides 58 comportant des orifices de passage des vis 50, 56. Les vis 50, 56 sont orientées axialement et régulièrement espacées autour de l'axe A. Les volutes 40a ,40b sont ainsi fixées par bridage.

Les volutes 40a, 40b ont des sens d'enroulement inversés de sorte que leurs ports 42 soient formés par des parties de conduits espacées l'une de l'autre. Les ports 42 sont indépendants l'un de l'autre et sont à distance et par exemple sensiblement diamétralement opposés par rapport à l'axe A.

Ainsi, la section minimale S2 de chaque conduit est située au niveau d'une plus grande section de l'autre conduit. La section maximale S1 de chaque conduit est située au niveau d'une plus petite section de l'autre conduit. Ceci est visible à la figure 3 notamment.

Comme cela est également visible à la figure 3, les ports 42 ont chacun une forme générale tubulaire et son accouplés respectivement aux entrée 38ba et sortie 38bb de l'échangeur 38 par des moyens appropriés.

Le second port 44 de chaque volute 40a, 40b comprend deux parois annulaires 60, 62 s'étendant autour de l'axe A et définissant entre elles une veine de passage d'air.

Les parois 60, 62 sont sensiblement parallèles et s'étendent en saillie radialement vers l'intérieur depuis le plan de jonction P des volutes et depuis les peaux annulaires de ces volutes. Dans l'exemple représenté, les parois 60, 62 sont tronconiques et convergent de l'amont vers l'aval radialement vers l'intérieur. Les parois 60, 62 sont donc inclinées par rapport au plan P.

Dans l'exemple représenté, l'ensemble de volutes 40 est formé d'une seule pièce. Les volutes 40a, 40b et leurs ports 42, 44 sont donc formés d'une seule pièce.

Dans le cas représenté, cela se traduit par le fait que les parois 62 des deux ports 44 sont confondues.

Les parois 60, 62 de la volute 40a ont des extrémités libres opposées au conduit, qui définissent un connecteur 64 orienté sensiblement radialement de liaison à la sortie 34b du diffuseur 34. Ce connecteur 64 a une forme annulaire et peut être fixé par des vis ou analogues au carter 29 ou à un autre carter de la turbomachine.

Les parois 60, 62 de la volute 40b ont des extrémités libres opposées au conduit, qui définissent un connecteur 66 orienté sensiblement axialement de liaison à l'entrée 36a du redresseur 36. Ce connecteur 66 a une forme annulaire et peut être accolé au bossage 52 et fixé par l'intermédiaire de ce bossage au carter 29.

Dans l'exemple représenté, les parois 60, 62 ont une épaisseur similaire ou identique à celle des peaux des conduits.

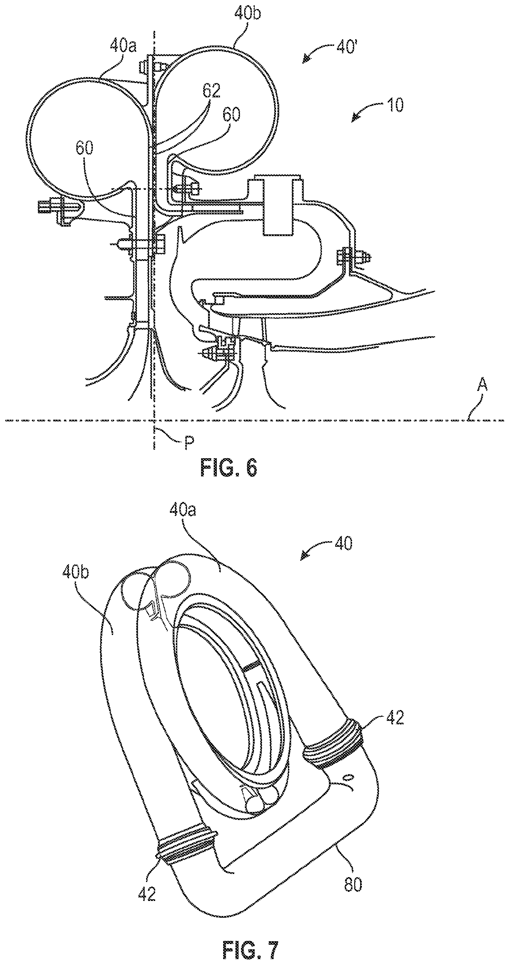

La figure 6 illustre un autre mode de réalisation d'une turbomachine d'aéronef 10 selon l'invention, qui diffère du mode de réalisation de la figure 2 essentiellement par son ensemble de volutes 40'.

Une première différence entre ces modes de réalisation concerne le fait que l'ensemble de volutes 40' de la figure 6 comprend deux pièces annulaires adjacentes, chaque pièce comportant une volute avec son conduit et ses ports 42, 44, ainsi que ses parois 60, 62. Les parois 62 des ports 44 ne sont donc pas confondues mais sont au contraire indépendantes et appliquées l'une sur l'autre.

Les parois 62 s'étendent ici dans le plan de jonction P des volutes. Les parois 60, 62 sont parallèles entre elles et au plan P. Le plan P s'étend ici juste en aval du diffuseur 34.

Par rapport aux positions axiales des volutes 40a, 40b de la figure 2, les volutes de la figure 6 sont davantage en aval.

Dans une autre variante de réalisation d'une turbomachine 10 selon l'invention, qui n'est pas représentée dans les dessins, le diffuseur 36 pourrait avoir, non pas une forme générale cylindrique à entrée 36a et sortie 36b axiale, mais plutôt une forme générale tronconique dont l'entrée serait orientée axialement mais la sortie serait orientée radialement vers l'intérieur et donc en direction de l'axe A.

Dans une autre variante non représentée, les volutes pourraient être recouvertes d'une couche thermiquement isolante. Cette couche pourrait être intercalée entre les deux parois 62 de la variante de réalisation de la figure 6 par exemple. Cette couche pourrait être formée par un matériau isolant voire de l'air.

La présente invention concerne également un procédé de fabrication d'une turbomachine d'aéronef.

Comme évoqué dans ce qui précède, une turbomachine peut être à cycle classique ou à cycle récupéré et le présent procédé propose de fabriquer la turbomachine en fonction du choix du fabriquant parmi ces cycles.

Le procédé comprend ainsi une première étape a) de détermination du cycle de la turbomachine, parmi un cycle classique et un cycle récupéré.

Le procédé comprend ensuite une seconde étape b1) ou b2) qui dépend du choix de la première étape.

Dans le cas d'un cycle classique, l'étape b1) consiste à raccorder la sortie 34b du diffuseur 34 à l'entrée 36a du redresseur 36 dans le cadre de la turbomachine 10 de la figure 2 ou 6.

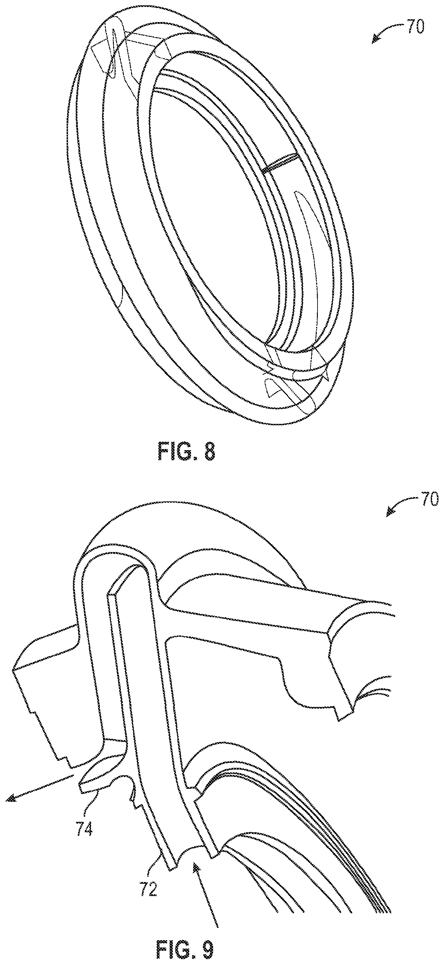

La sortie du diffuseur 34 peut être directement raccordée à l'entrée 36a du redresseur 36, comme dans l'exemple représenté aux figures 8 et 9. Le raccordement direct est ici réalisé par un élément annulaire 70 qui s'étend autour de l'axe A et définit une veine 72 de passage d'air ayant en section axiale une forme générale en U (cf. figure 9).

Cet élément 70 comprend un premier connecteur annulaire 72 qui est orienté radialement vers l'intérieur par rapport à l'axe A et qui est raccordé à la sortie 34b du diffuseur 34, et un second connecteur annulaire 74 qui est orienté sensiblement axialement et qui est raccordée à l'entrée 36a du redresseur 36. Les premier et second connecteurs 72, 74 sont respectivement situés aux extrémités de la veine en U.

L'élément 70 peut être fixé par bridage au carter 29 par exemple.

Dans le cas d'un cycle récupéré, l'étape b2) consiste à équiper la turbomachine avec l'ensemble de volutes 40 décrit dans ce qui précède, voire également avec un échangeur de chaleur 38 si ce n'est pas déjà je cas.

Les ports 42, 42 des volutes 40a, 40b sont raccordées à l'entrée 36a du diffuseur, à la sortie 34b du redresseur 34 et à l'échangeur 38, comme évoqué dans ce qui précède.

Dans le cas d'une maintenance de la turbomachine et de l'identification d'un dysfonctionnement, il est possible de transformer la turbomachine à cycle récupéré en une turbomachine à cycle classique.

Pour cela, le procédé comprend une étape suivante consistant à raccorder les ports 42 des volutes 40a, 40b l'un à l'autre par une conduite de dérivation 80, comme cela est illustré à la figure 7.

On comprend ainsi que, bien que l'air comprimé sortant du diffuseur 34 est injecté dans la volute 40a et circule jusqu'à son port 42, cet air comprimé va s'écouler dans la conduite 80 jusqu'au port 42 de l'autre volute 40b pour alimenter le redresseur 36. L'air comprimé n'est donc pas réchauffé, ce qui confirme que la turbomachine est bien à cycle classique.

## Revendications

1. Turbomachine (10) d'aéronef, comportant :
- un compresseur centrifuge (14) s'étendant autour d'un axe A,
- une chambre annulaire de combustion (24) s'étendant autour de l'axe A,
- un système (32) de diffusion et de redressement d'un flux d'air sortant du compresseur centrifuge pour alimenter la chambre de combustion, ce système comportant :
- un diffuseur annulaire (34) qui est orienté sensiblement radialement et qui comprend une entrée (34a) alimentée par le compresseur centrifuge, et
- un redresseur annulaire (36) qui comprend une sortie (36b) pour alimenter la chambre de combustion, et
- un échangeur de chaleur (38), cet échangeur comportant :
- un premier circuit (38a) alimenté en gaz d'échappement de la turbomachine, et
- un second circuit (38b) comportant une entrée (38ba) reliée par une première volute (40a) à une sortie (34b) du diffuseur (34), et une sortie (38bb) reliée par une seconde volute (40b) à une entrée (36a) du redresseur (36), les première et seconde volutes étant accolées et comportant chacune un conduit annulaire enroulé autour de l'axe A et relié à un premier port (42) situé à la périphérie externe du conduit et orienté en direction tangentielle, et un second port (44) situé à la périphérie interne du conduit et orienté en direction radiale, le conduit de chacune des volutes ayant une section de passage évolutive et qui est maximale (S1) au niveau du premier port et minimale (S2) à une extrémité circonférentielle du conduit opposée au premier port,
**caractérisée en ce que** les volutes (40a, 40b) ont des sens d'enroulement inversés de sorte que leurs premiers ports (42) soient formés par des parties de conduits espacées l'une de l'autre et que la section minimale (S2) de chaque conduit soit située au niveau d'une plus grande section de l'autre conduit.

2. Turbomachine (10) selon la revendication 1, dans laquelle chacune des volutes (40a, 40b) présente des sections de passage de forme circulaire ou ovale s'étendant sur un angle (β) d'au moins 220°.

3. Turbomachine (10) selon la revendication 1 ou 2, dans laquelle le second port (44) de chaque volute (40a, 40b) comprend deux parois annulaires (60, 62) s'étendant autour de l'axe A et définissant entre elles une veine de passage d'air.

4. Turbomachine (10) selon la revendication 3, dans laquelle les deux parois (60, 62) du second port (44) sont sensiblement parallèles et s'étendent en saillie depuis une peau annulaire de la volute, cette peau s'étendant autour de l'axe A et ayant en section axiale une forme circulaire ou ovale pour former ledit conduit.

5. Turbomachine (10) selon la revendication 4, dans laquelle l'une des parois (62) du second port (44) de la première volute (40a) est confondue avec l'une des parois (62) du second port (44) de la seconde volute (40b).

6. Turbomachine (10) selon la revendication 4 ou 5, dans laquelle les parois (60, 62) du second port (44) de la première volute (40a) ont des extrémités libres opposées à la peau, qui définissent un connecteur (64) orienté sensiblement radialement de liaison à la sortie (34b) du diffuseur (34), et les parois (60, 62) du second port (44) de la seconde volute (40b) ont des extrémités libres opposées à la peau, qui définissent un connecteur (66) orienté sensiblement axialement de liaison à l'entrée (36a) du redresseur (36).

7. Turbomachine (10) selon l'une des revendications 4 à 6, dans laquelle les parois (60, 62) des seconds ports (44) ont des formes planes et perpendiculaires à l'axe A, ou ont des formes tronconiques convergentes de l'amont vers l'aval vers l'intérieur.

8. Turbomachine (10) selon l'une des revendications 4 à 7, dans laquelle la peau et les parois (60, 62) ont sensiblement une même épaisseur.

9. Turbomachine (10) selon l'une des revendications précédentes, dans laquelle elle comprend en outre un carter externe (29) qui s'étend autour de l'axe A et entoure la chambre de combustion (24), les volutes (40a, 40b) étant à distance du carter (29) et fixées à ce dernier par des brides.

10. Ensemble de volutes pour une turbomachine (10) selon l'une des revendications précédentes, cet ensemble comportant des première et seconde volutes (40a, 40b) qui sont accolées et comportent chacune un conduit annulaire enroulé autour de l'axe A et relié à un premier port (42) situé à la périphérie externe du conduit et orienté en direction tangentielle, et un second port (44) situé à la périphérie interne du conduit et orienté en direction radiale, le conduit de chacune des volutes ayant une section de passage évolutive et qui est maximale (S1) au niveau du premier port et minimale (S2) à une extrémité circonférentielle du conduit opposée au premier port, **caractérisé en ce que** les volutes (40, 40b) ont des sens d'enroulement inversés de sorte que leurs premiers ports (42) soient formés par des parties de conduits espacées l'une de l'autre et que la section minimale (S2) de chaque conduit soit située au niveau d'une plus grande section de l'autre conduit.

11. Ensemble selon la revendication 10, dans laquelle les premiers ports (42) des volutes (40a, 40b) sont raccordés l'un à l'autre par une conduite de dérivation (80).

12. Procédé de fabrication d'une turbomachine (10) d'aéronef, cette turbomachine comportant :
- un compresseur centrifuge (14) s'étendant autour d'un axe A,
- une chambre annulaire de combustion (24) s'étendant autour de l'axe A,
- un système (32) de diffusion et de redressement d'un flux d'air sortant du compresseur centrifuge pour alimenter la chambre de combustion, ce système comportant :
- un diffuseur annulaire (34) qui est orienté sensiblement radialement et qui comprend une entrée (34a) alimentée par le compresseur centrifuge, et
- un redresseur annulaire (36) qui comprend une sortie (36b) pour alimenter la chambre de combustion,
**caractérisé en ce qu'**il comprend les étapes consistant à :
a) déterminer un cycle de la turbomachine, parmi un cycle classique et un cycle récupéré, et
b2) dans le cas d'un cycle récupéré, équiper la turbomachine avec un ensemble de volutes (40) selon la revendication 10 ou 11, une première des volutes (40a) ayant son second port (44) qui est raccordé à la sortie (34b) du diffuseur (34), et la seconde des volutes (40b) ayant son second port (44) qui est raccordé à l'entrée (36a) du redresseur (36).

## Patentansprüche

1. Turbotriebwerk (10) eines Luftfahrzeugs, umfassend:
- einen Zentrifugalkompressor (14), der sich um eine Achse A erstreckt,
eine ringförmige Brennkammer (24), die sich um die Achse A erstreckt,
- ein System (32) zur Verbreitung und zur Aufrichtung eines aus dem Zentrifugalkompressor heraustretenden Luftstroms zur Speisung der Brennkammer, wobei dieses System umfasst:
- einen ringförmigen Verteiler (34), der im Wesentlichen radial ausgerichtet ist und der einen durch den Zentrifugalkompressor gespeisten Eingang (34a) umfasst, und
- einen ringförmigen Gleichrichter (36), der einen Ausgang (36b) umfasst, um die Brennkammer zu speisen, und
- einen Wärmetauscher (38), wobei dieser Tauscher umfasst:
- einen ersten Kreislauf (38a), der mit Abgas von dem Turbotriebwerk gespeist wird, und
- einen zweiten Kreislauf (38b), der einen Eingang (38ba), der durch eine erste Spirale (40a) mit einem Ausgang (34b) des Verteilers (34) verbunden ist, und einen Ausgang (38bb) umfasst, der durch eine zweite Spirale (40b) mit einem Eingang (36a) des Gleichrichters (36) verbunden ist, wobei die erste und die zweite Spirale aneinandergefügt sind und jeweils eine ringförmige Leitung umfassen, die um die Achse A gewickelt ist und mit einem ersten Anschluss (42) verbunden ist, der sich am Außenumfang der Leitung befindet und in tangentialer Richtung ausgerichtet ist, und einen zweiten Anschluss (44), der sich am Innenumfang der Leitung befindet und in radialer Richtung ausgerichtet ist, wobei die Leitung jeder der Spiralen einen Durchgangsabschnitt umfasst, der evolutiv ist und der am ersten Anschluss maximal (S1) ist und an einem Umfangsende der Leitung gegenüber dem ersten Anschluss minimal (S2) ist,
**dadurch gekennzeichnet, dass** die Spiralen (40a, 40b) entgegengesetzte Wickelrichtungen aufweisen, sodass ihre ersten Anschlüsse (42) durch Leitungsteile gebildet werden, die voneinander beabstandet sind, und dadurch, dass sich der minimale Abschnitt (S2) jeder Leitung an einem größeren Abschnitt der anderen Leitung befindet.

2. Turbotriebwerk (10) nach Anspruch 1, wobei jede der Spiralen (40A, 40b) Durchgangsabschnitte mit kreisförmiger oder ovaler Form über einen Winkel (P) von mindestens 220° aufweist.

3. Turbotriebwerk (10) nach Anspruch 1 oder 2, wobei der zweite Anschluss (44) jeder Spirale (40a, 40b) zwei ringförmige Wände (60, 62) umfasst, die sich um die Achse A erstrecken und untereinander eine Luftdurchgangsader definieren.

4. Turbotriebwerk (10) nach Anspruch 3, wobei die zwei Wände (60, 62) des zweiten Anschlusses (44) im Wesentlichen parallel sind und sich ausgehend von einer ringförmigen Verkleidung der Spirale hervorstehend erstrecken, wobei diese Verkleidung sich um die Achse A erstreckt und im axialen Querschnitt eine kreisförmige oder ovale Form aufweist, um die Leitung zu bilden.

5. Turbotriebwerk (10) nach Anspruch 4, wobei eine der Wände (62) des zweiten Anschlusses (44) der ersten Spirale (40a) mit einer der Wände (62) des zweiten Anschlusses (44) der zweiten Spirale (40b) zusammenfällt.

6. Turbotriebwerk (10) nach Anspruch 4 oder 5, wobei die Wände (60, 62) des zweiten Anschlusses (44) der ersten Spirale (40a) freie Enden gegenüber der Verkleidung aufweisen, die ein im Wesentlichen radial ausgerichtetes Verbindungsstück (64) zur Verbindung mit dem Ausgang (34b) des Verteilers (34) definieren, und die Wände (60, 62) des zweiten Anschlusses (44) der zweiten Spirale (40b) freie Enden gegenüber der Verschalung aufweisen, die ein im Wesentlichen axial ausgerichtetes Verbindungsstück (66) zur Verbindung mit dem Eingang (36a) des Gleichrichters (36) definieren.

7. Turbotriebwerk (10) nach einem der Ansprüche 4 bis 6, wobei die Wände (60, 62) der zweiten Anschlüsse (44) ebene und zur Achse A senkrechte Formen aufweisen oder kegelförmige Formen aufweisen, die von stromaufwärts nach stromabwärts nach innen konvergieren.

8. Turbotriebwerk (10) nach einem der Ansprüche 4 bis 7, wobei die Verkleidung und die Wände (60, 62) im Wesentlichen eine gleiche Dicke aufweisen.

9. Turbotriebwerk (10) nach einem der vorstehenden Ansprüche, wobei es weiter ein Außengehäuse (29) umfasst, das sich um die Achse A erstreckt und die Brennkammer (24) umgibt, wobei die Spiralen (40a, 40b) vom Gehäuse (29) beabstandet sind und durch Flansche an diesem Letzteren befestigt sind.

10. Spiralenanordnung für ein Turbotriebwerk (10) nach einem der vorstehenden Ansprüche, wobei diese Anordnung erste und zweite Spiralen (40a, 40b) umfasst, die zusammengefügt sind und jeweils eine ringförmige Leitung umfasst, die um die Achse A gewickelt ist und mit einem ersten Anschluss (42) verbunden ist, der sich am Außenumfang der Leitung befindet und in tangentialer Richtung ausgerichtet ist, und einen zweiten Anschluss (44), der sich am Innenumfang der Leitung befindet und in radialer Richtung ausgerichtet, wobei die Leitung jeder der Spiralen einen Durchgangsabschnitt aufweist, der evolutiv ist und der am ersten Anschluss maximal (S1) ist und an einem Umfangsende der dem ersten Anschluss gegenüberliegenden Leitung minimal (S2) ist, **dadurch gekennzeichnet, dass** die Spiralen (40, 40b) entgegengesetzte Wickelrichtungen aufweisen, sodass ihre ersten Anschlüsse (42) durch Leitungsteile gebildet werden, die voneinander beabstandet sind, und dadurch, dass der minimale Abschnitt (S2) sich an einem größeren Abschnitt der anderen Leitung befindet.

11. Anordnung nach Anspruch 10, wobei die ersten Anschlüsse (42) der Spiralen (40a, 40b) durch eine Umgehungsleitung (80) miteinander verbunden sind.

12. Verfahren zur Herstellung eines Turbotriebwerks (10) eines Luftfahrzeugs, wobei dieses Turbotriebwerk umfasst:
- einen Zentrifugalkompressor (14), der sich um eine Achse A erstreckt,
eine ringförmige Brennkammer (24), die sich um die Achse A erstreckt,
- ein System (32) zur Verbreitung und zur Aufrichtung eines aus dem Zentrifugalkompressor heraustretenden Luftstroms zur Speisung der Brennkammer, wobei dieses System umfasst:
- einen ringförmigen Verteiler (34), der im Wesentlichen radial ausgerichtet ist und der einen durch den Zentrifugalkompressor gespeisten Eingang (34a) umfasst, und
- einen ringförmigen Gleichrichter (36), der einen Ausgang (36b) umfasst, um die Brennkammer zu speisen,
**dadurch gekennzeichnet, dass** es die Schritte umfasst, die aus Folgendem bestehen:
a) Bestimmen eines Zyklus des Turbotriebwerks aus einem klassischen Zyklus und einem wiederhergestellten Zyklus, und
b2) im Falle eines wiederhergestellten Zyklus, Ausrüsten des Turbotriebwerks mit einer Spiralenanordnung (40) nach Abschnitt 10 oder 11, wobei der zweite Anschluss (44) einer ersten der Spiralen (40a) mit dem Ausgang (34b) des Verteilers (34) verbunden ist und der zweite Anschluss (44) der zweiten der Spiralen (40b) mit dem Eingang (36a) des Gleichrichters (36) verbunden ist.

## Claims

1. An aircraft turbomachine (10), comprising:
- a centrifugal compressor (14) extending around an axis A,
- an annular combustion chamber (24) extending around the axis A,
- a system (32) for diffusing and rectifying an air flow leaving the centrifugal compressor to supply the combustion chamber, this system comprising:
▪ an annular diffuser (34) which is oriented substantially radially and which comprises an inlet (34a) supplied by the centrifugal compressor, and
▪ an annular rectifier (36) which comprises an outlet (36b) for supplying the combustion chamber, and
- a heat exchanger (38), this exchanger comprising:
▪ a first circuit (38a) supplied with exhaust gases from the turbomachine, and
▪ a second circuit (38b) comprising an inlet (38ba) connected by a first volute (40a) to an outlet (34b) of the diffuser (34), and an outlet (38bb) connected by a second volute (40b) to an inlet (36a) of the rectifier (36), the first and second volutes being joined together and each comprising an annular conduit wound around the axis A and connected to a first port (42) located at the external periphery of the conduit and oriented in a tangential direction, and a second port (44) located at the internal periphery of the conduit and oriented in a radial direction, the conduit of each of the volutes having an evolving passage cross-section which is maximum (S1) at the level of the first port and minimum (S2) at a circumferential end of the conduit opposite the first port,
**characterised in that** the volutes (40a, 40b) have reversed winding directions so that their first ports (42) are formed by conduit portions spaced apart from each other and the minimum cross-section (S2) of each conduit is located at the level of a larger cross-section of the other conduit.

2. The turbomachine (10) according to claim 1, wherein each of the volutes (40a, 40b) has circular or oval shaped passage cross-sections extending over an angle (β) of at least 220°.

3. The turbomachine (10) according to claim 1 or 2, wherein the second port (44) of each volute (40a, 40b) comprises two annular walls (60, 62) extending about the axis A and defining between them an air passage duct.

4. The turbomachine (10) according to claim 3, wherein the two walls (60, 62) of the second port (44) are substantially parallel and project from an annular skin of the volute, this skin extending about the axis A and having in axial cross-section a circular or oval shape to form said conduit.

5. The turbomachine (10) according to claim 4, wherein one of the walls (62) of the second port (44) of the first volute (40a) is coincident with one of the walls (62) of the second port (44) of the second volute (40b).

6. The turbomachine (10) according to claim 4 or 5, wherein the walls (60, 62) of the second port (44) of the first volute (40a) have free ends opposite the skin, which define a substantially radially oriented connector (64) for connection to the outlet (34b) of the diffuser (34), and the walls (60, 62) of the second port (44) of the second volute (40b) have free ends opposite the skin, which define a substantially axially oriented connector (66) for connection to the inlet (36a) of the rectifier (36).

7. The turbomachine (10) according to any one of claims 4 to 6, wherein the walls (60, 62) of the second ports (44) have flat shapes and perpendicular to the axis A, or have frustoconical shapes converging from upstream to downstream towards the interior.

8. The turbomachine (10) according to any of claims 4 to 7, wherein the skin and the walls (60, 62) have substantially a same thickness.

9. The turbomachine (10) according to any of the preceding claims, wherein it further comprises an external casing (29) which extends around the axis A and surrounds the combustion chamber (24), the volutes (40a, 40b) being spaced from the casing (29) and attached to the latter by flanges.

10. A volute assembly for a turbomachine (10) according to one of the preceding claims, this assembly comprising first and second volutes (40a, 40b) which are joined together and each comprise an annular conduit wound around the axis A and connected to a first port (42) located at the external periphery of the conduit and oriented in the tangential direction, and a second port (44) located at the internal periphery of the conduit and oriented in the radial direction, the conduit of each of the volutes having an evolving passage cross-section which is maximum (S1) at the level of the first port and minimum (S2) at a circumferential end of the conduit opposite the first port, **characterised in that** the volutes (40, 40b) have reversed winding directions so that their first ports (42) are formed by conduit portions spaced apart from each other and the minimum cross-section (S2) of each conduit is located at the level of a larger cross-section of the other conduit.

11. The assembly according to claim 10, wherein the first ports (42) of the volutes (40a, 40b) are connected to each other by a bypass conduit (80).

12. A method for manufacturing an aircraft turbomachine (10), this turbomachine comprising:
- a centrifugal compressor (14) extending around an axis A,
- an annular combustion chamber (24) extending around the axis A,
- a system (32) for diffusing and rectifying an air flow leaving the centrifugal compressor to supply the combustion chamber, this system comprising:
- an annular diffuser (34) which is oriented substantially radially and which comprises an inlet (34a) supplied by the centrifugal compressor, and
- an annular rectifier (36) which comprises an outlet (36b) for supplying the combustion chamber,
**characterised in that** it comprises the steps consisting in:
a) determining a cycle of the turbomachine, from a conventional cycle and a recovered cycle, and
b2) in the case of a recovered cycle, equipping the turbomachine with a volute assembly (40) according to claim 10 or 11, a first of the volutes (40a) having its second port (44) connected to the outlet (34b) of the diffuser (34), and the second of the volutes (40b) having its second port (44) connected to the inlet (36a) of the rectifier (36).
